# EUROPÄISCHE PATENTSCHRIFT

(11) **EP 3 649 717 B1**
(45) Veröffentlichungstag und Bekanntmachung des Hinweises auf die Patenterteilung: **04.08.2021**
(21) Anmeldenummer: 18730345.8
(22) Anmeldetag: 11.06.2018
(51) Int. Cl.: H02J 3/32

(54) **SYSTEM ZUM REDUZIEREN VON LASTSPITZEN IN EINER ELEKTRISCHEN ANLAGE**
SYSTEM FOR REDUCING LOAD PEAKS IN AN ELECTRICAL SYSTEM
SYSTÈME DE RÉDUCTION DE POINTES DE CHARGE DANS UNE INSTALLATION ÉLECTRIQUE

(30) Priorität: 07.07.2017 DE 102017211690
(43) Veröffentlichungstag der Anmeldung: 13.05.2020
(73) Patentinhaber: Bayerische Motoren Werke Aktiengesellschaft, 80809 München (DE)
(72) Erfinder: FUNKE, Alexander, 85598 Baldham (DE); BERGER, Jens, 81545 München (DE); ROMINGER, Julian, 80807 München (DE)
(86) Internationale Anmeldenummer: PCT/EP2018/065280
(87) Internationale Veröffentlichungsnummer: WO 2019/007631

(56) Entgegenhaltungen:
- EP-A1- 2 757 649
- EP-A2- 1 821 381
- WO-A1-2012/014731
- US-A1- 2007 035 290
- US-A1- 2015 303 690

## Beschreibung

Die Erfindung betrifft ein Verfahren zum Steuern einer steuerbaren Anlagenkomponente in einer elektrischen Anlage. Die Anlage kann beispielsweise ein Produktionsstandort sein. Allgemein ist die Anlage über einen Netzanschluss an ein elektrisches Versorgungsnetz angeschlossen. Mittels einer Steuervorrichtung und der steuerbaren Anlagenkomponente wird ein sogenanntes "Peak Shaving" bezüglich des Netzanschlusses durchgeführt, das heißt ein Leistungsbezug der Anlage aus dem elektrischen Versorgungsnetz wird auf einen Schwellenwert begrenzt. Zu der Erfindung gehören auch eine Steuervorrichtung für die steuerbare Anlagenkomponente sowie ein System zum Reduzieren von elektrischen Lastspitzen in einer elektrischen Anlage.

Eine Anlage kann z.B. ein Werksstandort mit mehreren Stromverbrauchern, Stromerzeugern und Stromspeichern sein. Allgemein zeichnet sich eine Anlage im Zusammenhang mit der Erfindung dadurch aus, dass die von ihr über den Netzanschluss bezogene elektrische Leistung nicht nur nach der sich ergebenden Energiemenge abgerechnet wird, sondern auch danach, wie groß ihr maximaler Leistungsbezug in einer Abrechnungsperiode (z.B. ein Jahr) war, d.h. wie viel elektrische Leistung also bereitgestellt werden musste. Dies wird für einzelne Zeitintervalle abgerechnet, die z.B. 15 Minuten dauern können. Dabei gibt es einen Leistungspreis je bezogene Leistung (MW oder kW), welcher von den Verteilernetzbetreibern festgelegt wird. Als abrechnungsrelevanter Leistungsbezug wird hierbei der Mittelwert der in einem Zeitintervall bezogenen elektrischen Leistung zugrunde gelegt. Daher ist es für den Betreiber der Anlage von Interesse, den Leistungsbezug, das heißt die über den Netzanschluss aus dem Versorgungsnetz bezogene elektrische Leistung, im Mittel für jedes Zeitintervall unter einem Schwellenwert zu halten.

Ein System der eingangs genannten Art ist beispielsweise aus der US 6,747,370 B2 bekannt. Das System aus dem Stand der Technik ist schnell-schaltend, das heißt der aktuelle Leistungsbezug wird überwacht und bei Überschreiten des Schwellenwerts wird sofort die in dem System bereitgestellte Batterie zugeschaltet.

Ein solches spontanes Zuschalten ist allerdings technisch aufwändig zu realisieren und nicht immer nötig. In der Regel wird an einem Netzanschluss der Leistungsbezug nicht als Momentanwert, sondern als Mittelwert über ein gegebenes Zeitintervall erfasst. Das Zeitintervall kann beispielsweise eine Dauer von 15 Minuten aufweisen. Nur wenn der Mittelwert über dem Schwellenwert liegt, kommt es für die Anlage zu einem Nachteil, beispielsweise zu höheren Bezugskosten für die Leistung. Der momentane Leistungsbezug kann also über dem Schwellenwert liegen, ohne dass es zu dem Nachteil kommt, solange eben der Mittelwert gerechnet auf das gesamte Zeitintervall unter dem Schwellenwert bleibt. Es tritt also nur für diejenigen Zeitintervalle, deren Mittelwert des Leistungsbezugs über dem Schwellenwert liegt, der vorbestimmte Nachteil ein, beispielsweise also höhere Bezugskosten für den Leistungsbezug in jenem Zeitintervall.

Das Erfassen von Leistungswerten einer Anlage und das Zusammenfassen zu Mittelwerten über einzelne Zeitintervalle ist aus der US 2012/0259583 A1 bekannt. Nachteilig bei dieser Zusammenfassung von aktuellen Leistungswerten und der anschließenden Berechnung des Mittelwerts ist allerdings, dass erst am Ende eines Zeitintervalls bekannt ist, ob der Mittelwert über dem Schwellenwert liegt. Somit kann für das Zeitintervall der Leistungsbezug nicht mehr korrigiert werden und es kommt zu dem besagten Nachteil, also beispielsweise den höheren Bezugskosten. Erst für das nächste Zeitintervall kann dann vorsorglich das "Peak Shaving" eingeleitet werden.

In Bezug auf ein solches "Peak Shaving" ist aus der US 3,906,242 A bekannt, Anlagenkomponenten einer Anlage spontan abzuschalten, falls der Leistungsbezug über einem Schwellenwert liegt. Dies schränkt aber den Funktionsumfang der Anlage ein.

Aus der US 2004/0263116 A1 ist eine Steuervorrichtung zum Steuern mehrerer Energiespeichereinrichtungen bekannt. Die Energiespeichereinrichtungen werden dahingehend koordiniert, dass sie Energie aufnehmen oder abgeben, und zwar in der Weise, dass es für den Verbund der Energiespeichereinrichtungen optimal ist. Damit kann aber nicht mehr jede Energiespeichereinrichtung individuell auf den lokalen Bedarf reagieren.

Die EP 1821381 A2, US 2015/303690 A1, US 2007/035290 A1, EP 2757649 A1 und WO 2012/014731 A1 gehören zum Stand der Technik.

Der Erfindung liegt die Aufgabe zugrunde, in einer elektrischen Anlage mittels einer Anlagenkomponente eine Lastspitzenbegrenzung ("Peak Shaving") in Bezug auf den Leistungsbezug am Netzanschluss der Anlage durchzuführen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Steuern einer steuerbaren Anlagenkomponente in einer elektrischen Anlage gegeben. Allgemein ist die steuerbare Anlagenkomponente eine in ihrem Leistungsverbrauch oder ihrer Leistungserzeugung zum Zwecke der Lastspitzenbegrenzung flexibel steuerbare Anlagenkomponente. Es kann sich um einen Erzeuger oder Speicher oder einen Verbraucher handeln. Die steuerbare Anlagenkomponente kann z.B. einen Energiespeicher oder auch eine reine Energiequelle enthalten. Das Gegenteil einer steuerbaren Anlagenkomponente ist eine nicht-steuerbare Anlagenkomponente, was bedeutet, dass deren Leistung nicht zum Zwecke der Lastspitzenbegrenzung verändert werden kann, weil von ihr z.B. die Produktion eines Produkts abhängt. Eine steuerbare Anlagenkomponente kann als Speicher z.B. eine Batterieanordnung und/oder als Erzeuger z.B. ein Blockheizkraftwerk umfassen. Die steuerbare Anlagenkomponente kann als Verbraucher z.B. eine Lüftungsanlage sein, deren Förderleistung einstellbar ist.

Die Anlage kann in an sich bekannter Weise über einen Netzanschluss an einem elektrischen Versorgungsnetz angeschlossen sein. Für den Betrieb ihrer Anlagenkomponenten (steuerbar oder nicht-steuerbar) kann die Anlage somit über den Netzanschluss elektrische Leistung aus dem elektrischen Versorgungsnetz empfangen. Für den Fall, dass dabei ein netzbezogener Leistungsbezug, also die aus dem Versorgungsnetz bezogene elektrische Leistung, größer als ein vorbestimmter Schwellenwert ist, wird die besagte Lastspitzenbegrenzung durchgeführt. Hierzu wird der Leistungsbezug (aus dem Versorgungsnetz) durch Schalten von elektrischer Kompensationsleistung mittels der steuerbaren Anlagenkomponente unter den Schwellenwert geführt. Die steuerbare Anlagenkomponente ist ja Teil der Anlage, sodass im Falle einer steuerbaren Anlagenkomponente, die ein Erzeuger oder Speicher ist, eine von der Anlagenkomponente abgegebene Kompensationsleistung nicht über den Netzanschluss fließt, sondern direkt über das elektrische Anlagennetz zu einer anderen Anlagekomponente gelangt. Mit anderen Worten wird also die von der steuerbaren Anlagenkomponente abgegebene Kompensationsleistung genutzt, um zumindest eine andere, weitere Anlagenkomponente mit elektrischer Leistung zu versorgen, sodass diese Leistung nicht mehr über den Netzanschluss bezogen werden muss. Im Falle einer steuerbaren Anlagenkomponente, die selbst ein Verbraucher ist, führt eine Schaltung direkt zu einem geringeren Bezug aus dem Netz. Die Kompensationsleistung ist also eine mittels eines Erzeugers oder Speichers zusätzlich eingespeiste Leistung oder eine durch Drosselung eines Verbrauchers verfügbar werdende Leistung. Das Schalten der Kompensationsleistung mittels der Anlagenkomponente kann z.B. als zeitlich programmiertes Entladen eines Energiespeichers oder das Drosseln eines Verbrauchers auf eine vorbestimmte Leistung oder mittels einer Regelung erfolgen.

Wie bereits eingangs beschrieben, geht das Verfahren davon aus, dass der Leistungsbezug ein jeweiliger Mittelwert ist, der jeweils für einzelne, aufeinanderfolgende Zeitintervalle berechnet wird. Der Leistungsbezug wird also als jeweiliger Mittelwert über einzelne, aufeinanderfolgende Zeitintervalle erfasst. Liegt der aktuelle Leistungsbezug über dem Schwellenwert, so bedeutet dies, dass der für das aktuelle Zeitintervall berechnete Mittelwert über dem Schwellenwert liegt.

Nun ergibt sich aber das eingangs beschriebene Problem, dass während des aktuellen Zeitintervalls nicht bekannt ist, welcher Mittelwert sich am Ende des aktuellen Zeitintervalls ergeben wird. Somit kann man eigentlich nur am Ende des Zeitintervalls erkennen, ob der Mittelwert überschritten wurde. Dann kann aber erst für das nachfolgende Zeitintervall eine Gegenmaßnahme (d.h. die Lastspitzenbegrenzung) ergriffen, nämlich die Kompensationsleistung eingespeist werden. Um früher zu reagieren, also schon vor dem Ende des aktuellen Zeitintervalls, ist erfindungsgemäß Folgendes vorgesehen. Durch eine Steuervorrichtung wird zu zumindest einem Zeitpunkt innerhalb des jeweils aktuellen Zeitintervalls bereits der Mittelwert des aktuellen Zeitintervalls vorausgesagt. Es findet also eine Prognose des Mittelwerts statt. Hierzu wird ein zukünftiger, bis zum Ende des Zeitintervalls reichender Verlauf des Leistungsbezugs anhand von Prognosedaten zumindest einer weiteren Anlagenkomponente der Anlage ergänzt. Somit kann schon während des Zeitintervalls entschieden werden, wie viel Kompensationsleistung die steuerbare Anlagenkomponente in die Anlage abgeben oder um wie viel Kompensationsleistung der Verbrauch der steuerbaren Anlagenkomponente gedrosselt werden soll, um am Ende des aktuellen Zeitintervalls doch noch einen Mittelwert zu erhalten, der kleiner als der Schwellenwert ist. Anhand der Prognosedaten kann also der Mittelwert für das aktuelle Zeitintervall also Prognosewert vorausgesagt werden, obwohl es noch gar nicht beendet ist. Falls dieser Prognosewert größer als der Schwellenwert ist, kann schon innerhalb des Zeitintervalls oder während des Zeitintervalls die steuerbare Anlagenkomponente angesteuert oder geschaltet werden, damit sie mit ihrer Kompensationsleistung den Leistungsbezug bereits innerhalb des aktuellen Zeitintervalls reduziert, um hierdurch den Mittelwert bis zum Ende des Zeitintervalls unter dem Schwellenwert zu führen. Das aktive Abgeben von Kompensationsleistung einerseits und die Leistungsdrosselung zum Verfügbarmachen von Kompensationsleistung andererseits sind im Folgenden zusammenfassend als "Bereitstellen von Kompensationsleistung" bezeichnet.

Durch die Erfindung ergibt sich der Vorteil, dass schon für das aktuelle Zeitintervall vor dessen Ende ein Schaltsignal oder Steuersignal für die steuerbare Anlagenkomponente erzeugt werden kann, sodass Kompensationsleistung schon im aktuellen Zeitintervall bereitgestellt wird, wenn für dieses Zeitintervall erkannt oder prognostiziert wird, dass es voraussichtlich einen Mittelwert größer als der Schwellenwert aufweisen wird. Somit kann schon für das aktuelle Zeitintervall verhindert werden, dass dessen Mittelwert den Schwellenwert überschreitet und somit beispielsweise erhöhte Bezugskosten entstehen. Der für das Ende des aktuellen Zeitintervalls prognostizierte Mittelwert des Leistungsbezugs ist im Folgenden als Prognosewert bezeichnet.

Bisher wurde die Erfindung derart beschreiben, dass davon ausgegangen wurde, dass nur eine einzelne steuerbare Anlagenkomponente flexibel in Bezug auf ihre Kompensationsleistung steuerbar ist. Natürlich können auch mehrere steuerbare Anlagenkomponenten vorgesehen sein, die dann jeweils gemäß dem Verfahren gesteuert werden können, um somit insgesamt mit mehreren steuerbaren Anlagenkomponenten eine benötigte Kompensationsleistung bereitzustellen. Im Folgenden wird zur Vereinfachung der Darstellung der Erfindung nur von einer einzelnen steuerbaren Anlagenkomponente ausgegangen. Das Verfahren kann aber in der besagten Weise auf mehrere steuerbare Anlagenkomponenten zugleich angewendet werden, um mit ihnen in Summe die Kompensationsleistung bereitzustellen.

Falls während eines Zeitintervalls der Leistungsbezug der Anlage sprunghaft ansteigt, kann es unter Umständen zu spät sein, um mittels der steuerbaren Anlagenkomponente noch genug Kompensationsleistung bereitzustellen, damit der Mittelwert für das aktuelle Zeitintervall am Ende unter dem Schwellenwert liegt. Daher wird vorgesorgt, indem ein Puffer X geschaffen wird. Es wird für den Fall, dass der Prognosewert (vorhergesagter Mittelwert) zwar kleiner als der Schwellenwert S, aber schon größer als ein vorbestimmter Sicherheitswert S-X ist, eine vorbereitende Maßnahme getroffen. Diese vorbereitende Maßnahme besteht darin, dass mittels der steuerbaren Anlagenkomponente durch Vorgeben eines Sollwerts für die von ihr abzugebende Kompensationsleistung der Leistungsbezug auf den Sicherheitswert S-X reduziert wird. Man strebt also mittels der Kompensationsleistung an, dass für den Rest des Zeitintervalls der Leistungsbezug hin zum Sicherheitswert strebt. Steigt der Leistungsbedarf der Anlage unerwartet und/oder sprunghaft an, so steht noch der Puffer X bereit. Der Puffer X kann auch dynamisch angepasst werden, um eventuelle Fehlprognosen zu kompensieren. Der Puffer passt sich bevorzugt zudem mit fortschreitender Zeit in einem Zeitintervall dynamisch an.

Zu der Erfindung gehören auch Weiterbildungen, durch die sich zusätzliche Vorteile ergeben.

Der zeitliche Verlauf des Leistungsbezugs wird durch aufeinanderfolgende Messwerte der aktuell aus dem Versorgungsnetz über den Netzanschluss bezogenen elektrischen Leistung beschrieben. Um nicht bei jedem Messwert die Berechnung des Prognosewerts, also die Prognose des Mittelwerts durchführen zu müssen, ist folgende Weiterbildung vorgesehen. Während des jeweils aktuellen Zeitintervalls werden aufeinanderfolgende Messwerte des aktuellen netzbezogenen Leistungsbezugs ermittelt und der Mittelwert wird aber nur geprüft, falls ein aktueller Messwert größer oder gleich dem Schwellenwert ist. Falls bisher der Prognosewert unterhalb des Schwellenwerts lag, sind keine Schaltungen notwendig. Daran kann sich nur etwas ändern, falls der aktuelle Messwert größer als der Schwellenwert ist. Somit kann auf das wiederholte Berechnen des Prognosewerts solange verzichtet werden, bis ein aktueller Messwert größer als der Schwellenwert vorliegt. Hierdurch werden also Rechenressourcen gespart. Zur Sicherheit kann schon bei einem aktuellen Messwert gleich dem Schwellenwert neu berechnet werden. Das ergibt auch den Vorteil, dass Schaltungsvorgänge vermieden werden, wenn die Prognose einen günstigen Leistungsverlauf vorhersagt. Es braucht dann nur gegen Ende des relevanten Zeitintervalls reagiert werden. So werden überflüssige Schaltungsvorgänge vermieden.

Eine Dauer jedes Zeitintervalls, für welches jeweils der Mittelwert berechnet wird, liegt bevorzugt in einem Bereich von 30 Sekunden bis 15 Minuten. So kann beispielsweise ein Zeitintervall mit einer Dauer von 15 Minuten vorgesehen sein. Innerhalb dieser Dauer lässt sich mittels einer Anlagenkomponente der Mittelwert noch rechtzeitig vor dem Ende des Zeitintervalls unter den Schwellenwert führen, falls der Prognosewert über dem Schwellenwert liegt.

Die für die Prognose verwendeten Prognosedaten werden bevorzugt aus historischen Leistungsdaten der zumindest einen weiteren (nicht-steuerbaren) Anlagenkomponente der Anlage gebildet. Die Leistungsdaten können einen Verbrauch und/oder eine Erzeugung von Leistung der jeweiligen Anlagenkomponente beschreiben. Somit kann das typische Verhalten der zumindest einen weiteren Anlagekomponente berücksichtigt werden. Für ein aktuelles Zeitintervall kann aus den Prognosedaten eine Teilmenge ausgewählt werden. Hierbei können historische Leistungsdaten zugrunde gelegt werden, die unter denselben Zuständen und/oder Bedingungen entstanden sind, wie sie auch während des aktuellen Zeitintervalls herrschen. So kann also aus den historischen Leistungsdaten die Untermenge in Abhängigkeit von der Jahreszeit, dem Wochentag, der Tageszeit, dem Wetter und/oder den Auftragsdaten und/oder andere Daten, welche die Auslastung der zumindest einen weiteren Anlagekomponente beschreiben, ausgewählt werden. Weiter kann die Prognose um aktuelle prognoserelevante Eingangsparameterdaten, z.B. bezogen auf das Wetter und/oder einen Ausfall von zumindest einer Anlagenkomponente und/oder eine Anpassung von Produktionsstückzahlen, angereichert werden, welche relevant für den Energieverbrauch bzw. Energieerzeugung sind.

Damit innerhalb eines aktuellen Zeitintervalls der Mittelwert prognostiziert werden kann, sind die besagten Messwerte nötig, die den Leistungsbezug vom Beginn des Zeitintervalls an bis zum aktuellen Zeitpunkt beschreiben. Dies ist in einem Normalbetriebsmodus der Fall, in welchem zum Berechnen des Prognosewerts ein bisheriger, vom Anfang oder Beginn des Zeitintervalls an und bis zum aktuellen Zeitpunkt reichender Verlauf des Leistungsbezugs anhand von Messwerten aus der zumindest einen weiteren (nicht-steuerbaren) Anlagenkomponente und/oder aus Messwerten aus dem Netzanschluss gebildet wird. Falls Messwerte zur Verfügung stehen, hat sich ein Messintervall in einem Bereich von 1 Sekunde bis 10 Sekunden als vorteilhaft erwiesen, um eine Tendenz im Verlauf des Leistungsbezugs ausreichend genau zu beschreiben.

Allerdings setzt dies voraus, dass die Messwerte auch in der Steuervorrichtung bereitstehen, die die Prognose durchführen soll. Fehlen diese Messwerte, weil z.B. die Kommunikationsverbindung unterbrochen ist, so wird in einen Fehlerbetriebsmodus geschaltet, in welchem für die Beschreibung des Verlaufs des Leistungsbezugs vom Anfang des Zeitintervalls bis zum aktuellen Zeitpunkt weitere Prognosedaten der zumindest einen weiteren Anlagenkomponente zugrunde gelegt werden. Besteht also keine Datenverbindung zwischen den Stromzählern oder Leistungszählern einerseits und der Steuervorrichtung andererseits, so kann weiterhin "blind" der Mittelwert allein auf Grundlage von Prognosedaten berechnet werden.

Für den Fall, dass der Leistungsbezug der Anlage kleiner als der Schwellenwert ist, kann die steuerbare Anlagenkomponente mit elektrischer Leistung aus dem Versorgungsnetz regeneriert werden, falls die steuerbare Anlagenkomponente gerade keine Kompensationsleistung liefern muss. Weist die steuerbare Anlagenkomponente beispielsweise einen elektrochemischen Akkumulator, das heißt eine Batterie, auf, kann diese also aufgeladen werden.

Der besagte Schwellenwert muss nicht für den ganzen Tag gelten. In einer vorbestimmten Betriebssituation kann es sein, dass für das Versorgungsnetz ein sogenanntes Hochlastzeitfenster definiert ist und der Schwellenwert nur innerhalb des Hochlastzeitfensters gilt. Dann wird das beschriebene Begrenzen des Leistungsbezugs auch entsprechend auf die Dauer des Hochlastzeitfensters begrenzt. Außerhalb des Hochlastzeitfensters ist dann beispielsweise das Überschreiten des Schwellenwerts nicht abrechnungsrelevant. Entsprechend kann auch die steuerbare Anlagenkomponente außerhalb des Hochlastzeitfensters regeneriert werden, also beispielsweise ein Akkumulator der steuerbaren Anlagenkomponente aufgeladen werden.

Um das erfindungsgemäße Verfahren in einer Anlage durchführen zu können, ist erfindungsgemäß eine Steuervorrichtung zum Steuern zumindest einer steuerbaren Anlagenkomponente bereitgestellt. Die Steuervorrichtung weist eine Recheneinrichtung auf, beispielsweise mit einen Mikroprozessor, wobei die Recheneinrichtung dazu eingerichtet ist, eine Ausführungsform des erfindungsgemäßen Verfahrens durchzuführen. Hierzu kann ein Programmcode für die Recheneinrichtung bereitgestellt sein, der bei Ausführen durch die Recheneinrichtung die Ausführungsform des erfindungsgemäßen Verfahrens durchführt. Die Recheneinrichtung kann auch auf einer Cloudlösung oder internetbasierten Anlage basieren, von welcher sie Steuersignale an eine lokale Steuerung der zumindest einen steuerbaren Anlagenkomponente sendet.

Durch Kombinieren der Steuervorrichtung mit zumindest einer steuerbaren Anlagenkomponente ergibt sich ein erfindungsgemäßes System zum Reduzieren von elektrischen Lastspitzen in einer elektrischen Anlage. Die Steuervorrichtung kann beispielsweise als ein Steuergerät oder als ein Steuercomputer für die zumindest eine steuerbare Anlagenkomponente oder für die Anlage ausgestaltet sein.

Eine Anlage kann beispielsweise eine Produktionsanlage an einem Produktionsstandort oder Industrieanlage sein. Bei der Anlage kann es sich aber auch beispielsweise um eine Gebäudeanlage, beispielsweise für Büros, handeln.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Im Folgenden ist ein Ausführungsbeispiel der Erfindung beschrieben. Hierzu zeigt:
- Fig. 1: eine schematische Darstellung einer Anlage mit einer Ausführungsform des erfindungsgemäßen Systems zum Reduzieren von elektrischen Lastspitzen in der Anlage;
- Fig. 2: ein Diagramm mit einem schematisierten Verlauf eines Leistungsbezugs der Anlage von Fig. 1; und
- Fig. 3: ein Flussschaudiagramm zur Veranschaulichung einer Ausführungsform des erfindungsgemäßen Verfahrens, wie es in der Anlage von Fig. 1 durchgeführt werden kann.

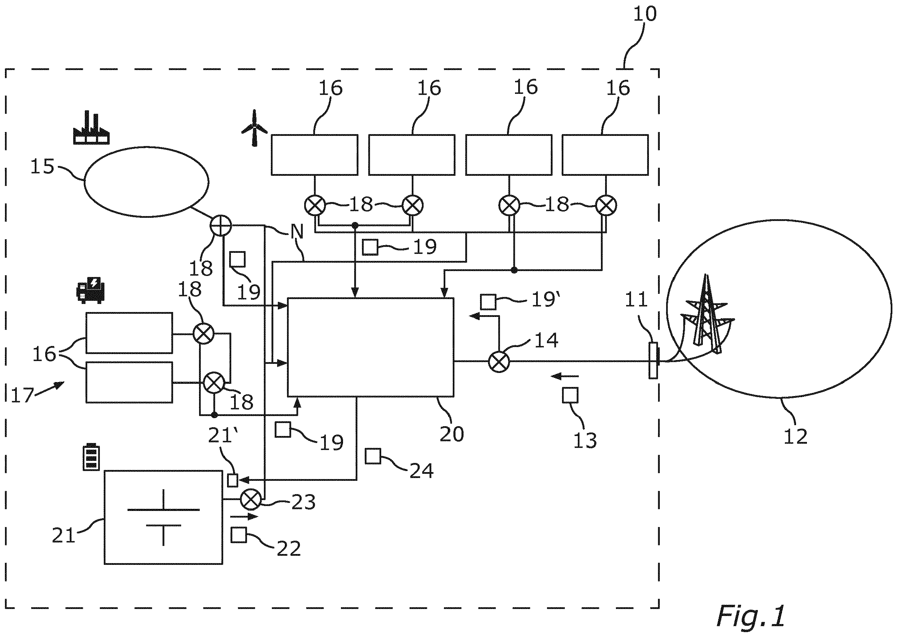

Fig. 1 zeigt eine Anlage 10, bei der es sich zum Beispiel um ein Werk zum Herstellen eines Produkts handeln kann, z.B. um eine Produktionsanlage für Kraftfahrzeuge. Um die Anlage 10 mit elektrischer Energie zu versorgen, kann ein elektrisches Anlagennetz oder Werksnetz N der Anlage 10 über einen Netzanaschluss 11 an ein elektrisches Versorgungsnetz 12 angeschlossen sein. Es kann sich beispielsweise um ein elektrisches Versorgungsnetz für 50-Hertz-Wechselstrom handeln, beispielsweise um ein Hochspannungsnetz, Mittelspannungsnetz oder Niederspannungsnetz.

Aus dem Versorgungsnetz 12 kann die Anlage 10 elektrische Leistung 13 empfangen, was durch einen Netzzähler oder Werkszähler 14 für elektrische Leistung oder elektrische Energie gemessen werden kann. Ein solcher Werkszähler 14 ist Stand der Technik. Die elektrische Leistung 13 kann über das Werksnetz N zwischen den Anlagenkomponenten 17 verteilt werden.

Die Anlage 10 kann zumindest einen elektrischen Verbraucher 15 und optional zumindest einen elektrischen Erzeuger 16 aufweisen. Jeder Verbraucher 15 und jeder Erzeuger 16 stelle dabei eine in Bezug auf eine Lastspitzenbegrenzung nicht-steuerbare Anlagenkomponente 17 dar, weil z.B. ihre Reaktionszeiten nicht gering genug sind oder ein vorbestimmter Betriebspunkt für sie vorgegeben ist. Bei dem zumindest einen elektrischen Verbraucher 15 kann es sich beispielsweise um ein Produktionssystem oder Fördersystem oder Signalisierungssystem handeln. Ein Erzeuger 16 kann z.B. durch ein Kohlekraftwerk oder eine Solaranlage oder eine Windkraftanlage gebildet sein. Eine jeweils erzeugte oder verbrauchte elektrische Leistung der jeweiligen Anlagenkomponente 17 kann durch einen jeweiligen Komponentenzähler 18 erfasst werden. Ein Komponentenzähler entspricht in seiner Funktionsweise einem Werkszähler.

Jeweilige Messwerte 19 jedes Komponentenzählers 18 und Messwerte 19' des Werkzählers 14 können an eine Steuervorrichtung 20 signalisiert werden, die durch eine Gebäudeleittechnik realisiert werden kann.

Die Anlage 10 kann des Weiteren eine für die Lastspitzenbegrenzung steuerbare Anlagenkomponente 21 aufweisen, bei der es sich zum Beispiel um einen Batteriespeicher oder eine elektrische Speicherfarm z.B. aus Kondensatoren und/oder Batterien handeln kann. Der Batteriespeicher ist hier aber nur als ein Beispiel für eine flexibel steuerbare Anlagenkomponente zu sehen.

Eine von der Anlagenkomponente 21 im Werksnetz N bereitgestellte elektrische Kompensationsleistung 22 kann durch einen Zähler 23 erfasst werden, um die Kompensationsleistung 22 z.B. auf einen Sollwert einregeln zu können. Bei der von der Anlagenkomponente 21 bereitgestellten Kompensationsleistung 22 kann es sich um ihre effektive Wirkleistung handeln. Mit anderen Worten kann eine durch die Anlagenkomponente 21 bewirkte Blindleistungskompensation unberücksichtigt bleiben.

Der Sollwert der Kompensationsleistung 22 kann durch die Steuervorrichtung 20 mittels eines Steuersignals 24 für die Anlagenkomponente 21 vorgegeben oder eingestellt werden. Das Steuersignal 24 kann z.B. an eine speicherprogrammierbare Steuerung 21' der Anlagenkomponente 21 übertragen werden, welche dann die Kompensationsleistung 22 auf den Sollwert einregelt.

Insgesamt kann der zumindest eine elektrische Verbraucher 15 der Anlage 10 somit elektrische Leistung aus den anlageneigenen elektrischen Erzeugern 16, dem elektrischen Versorgungsnetz 12 und der Anlagenkomponente 21 empfangen.

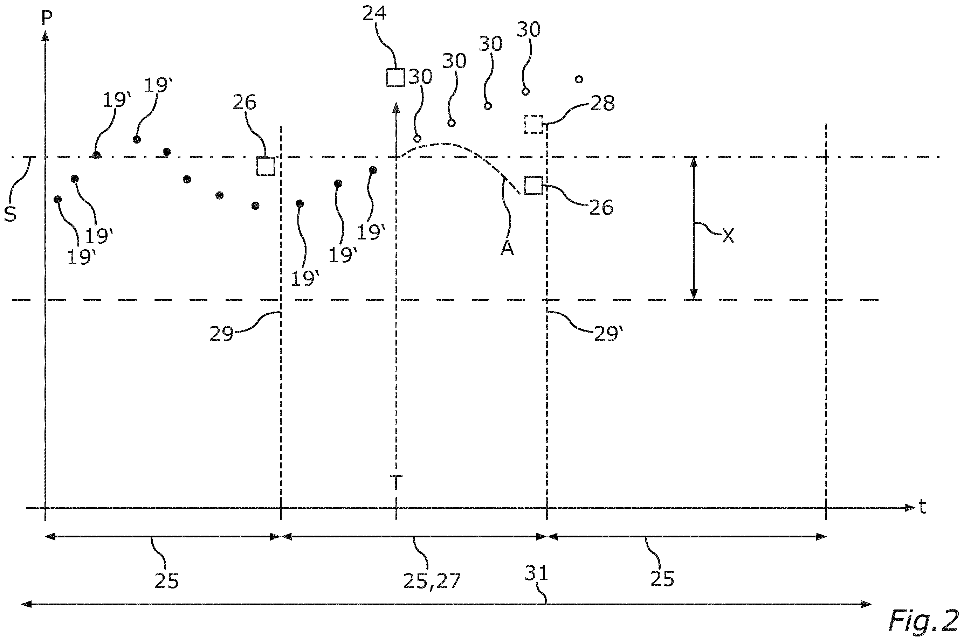

Bei der Anlage 10 kann für den Bezug der elektrischen Leistung 13 aus dem Versorgungsnetz 12 ein schwellenwertabhängiger Tarif für die Bezahlung der Leistung 13 vorgesehen sein, was in Zusammenhang mit Fig. 2 erläutert ist.

Fig. 2 zeigt über der Zeit t den Leistungsbezug P der Anlage 10 aus dem Versorgungsnetz 12 über den Netzanschluss 11. Dargestellt sind die Messwerte 19' des Werkszählers 14, von denen der Übersichtlichkeit halber nur einige mit einem Bezugszeichen versehen sind. Für aufeinanderfolgende Zeitintervalle 25 kann vorgesehen sein, dass der Mittelwert 26 des Leistungsbezugs P ermittelt wird. Solange der Mittelwert 26 für ein Zeitintervall 25 kleiner als der Schwellenwert S ist, wird ein Leistungspreis für die bezogene Leistung P auf den Schwellenwert S bezogen. Ist der Mittelwert 26 größer als der Schwellenwert S, wird für eine gesamte Abrechnungsperiode 31 (z.B. ein Jahr) ein höherer Leistungswert als Bemessungsrundlage für die Zahlung des Leistungspreises herangezogen.

Die Steuervorrichtung 20 kann deshalb mittels des Steuersignals 24 die Anlagenkomponente 21 immer dann ansteuern, wenn der Mittelwert 26 oberhalb des Schwellenwerts S liegt, sodass der Leistungsbezug P im Mittel zumindest für nachfolgende Zeitintervalle 25 unter dem Schwellenwert S liegt.

Bei der Anlage 10 kann die Steuervorrichtung 20 aber auch schon während eines aktuellen Zeitintervalls 27 zu einem Zeitpunkt T innerhalb des aktuellen Zeitintervalls 27 entscheiden oder ermitteln, ob für das aktuelle Zeitintervall 27 der Mittelwert 26 voraussichtlich oberhalb des Schwellenwerts liegen wird. Hierzu wird ein prognostizierter oder vorausgesagter Prognosewert 28 des Mittelwerts ermittelt. Es können hierzu die Messwerte 19' des Werkszählers 14 bis zum aktuellen Zeitpunkt T zugrunde gelegt werden. Hierdurch kann von einem Anfang 28 des aktuellen Zeitintervalls 27 bis zum aktuellen Zeitpunkt T der Leistungsbezug P ermittelt werden. Für den Zeitraum vom aktuellen Zeitpunkt T bis zum Ende 29 des aktuellen Zeitintervalls 27 können durch die Steuervorrichtung 20 Prognosedaten 30 zugrunde gelegt werden, welche ein historisches Verhalten oder historische Leistungsdaten der Anlagenkomponenten 15, 16 der Anlage 10 beschreiben. Somit kann der prognostizierte Mittelwert oder Prognosewert 28 für das aktuelle Zeitintervall 27 berechnet werden. Liegt dieser Prognosewert 28 oberhalb des Schwellenwerts S, so kann mittels des Steuersignals 24 die Steuervorrichtung 20 die Anlagenkomponente 21 dahingehend konfigurieren, dass diese Kompensationsleistung 22 in das Werksnetz N einspeist. Dadurch verringert sich bereit im aktuellen Zeitintervall 27 der Leistungsbezug P, das heißt es wird weniger elektrische Leistung 13 über den Netzanschluss 11 aus dem Versorgungsnetz 12 bezogen. Falls also der Prognosewert 28 größer als der Schwellenwert S ist, kann z.B. durch das Steuersignal 24 ein Sollwert für die Kompensationsleistung 22 der Anlagenkomponente 21 erzeugt oder angepasst werden. Durch den Sollwert kann die Abgabe von Kompensationsleistung 22 vergrößert werden, damit sich ein alternativer oder angepasster Verlauf A des Leistungsbezugs P ergibt, durch welchen sich am Ende 29' des aktuellen Zeitintervalls 27 doch noch ein Mittelwert 26 ergibt, der kleiner als der Schwellenwert S ist.

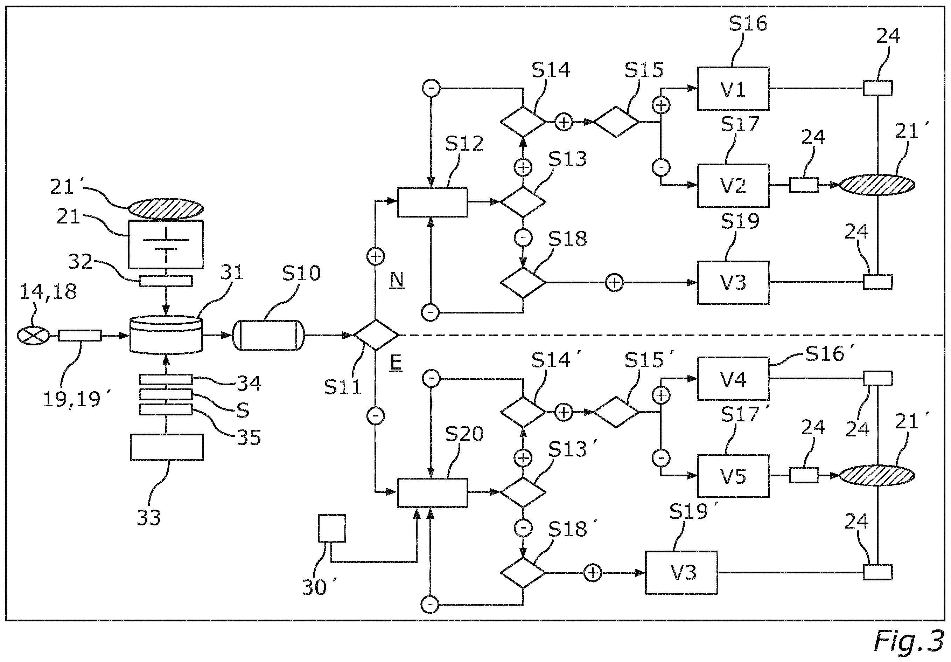

Fig. 3 veranschaulicht ein konkretes Beispiel für diese Steuerung. Des Weiteren wird Bezug auf Fig. 1 und Fig. 2 genommen.

In einem Datenspeicher 31 können aus dem Werkszähler 14 die aktuellen Messwerte 19', und aus den Komponentenzählern 18 die Messwerte 19 und aus der Anlagenkomponente 21 der aktuelle Füllstand 32 und aus einer externen Datenquelle 33, beispielsweise aus einer Eingabeeinrichtung oder Konfigurationseinrichtung, ein unterer Grenzwert 34 für den Speicherfüllstand 32, der Schwellenwert S und Zeitangaben für ein Hochlastzeitfenster 35 empfangen und zwischengespeichert werden.

Ausgehend von einem Prozessstart oder Start S10 kann in einem Schritt S11 überprüft werden, ob ein Normalbetrieb N möglich ist oder ein Fehlerbetrieb E nötig ist. Dies wird davon abhängig gemacht, ob eine Kommunikationsverbindung zu den Zählern 14, 18 besteht und die Messwerte 19, 19' empfangen werden können oder im Datenspeicher 31 vorliegen. Bei positivem Ergebnis (in Fig. 3 durch ein Plus-Zeichen "+" symbolisiert) wird der Normalbetrieb ausgewählt, bei negativem Ergebnis (in Fig. 3 durch ein Minus-Zeichen "-" symbolisiert) wird der Fehlerbetrieb E ausgewählt.

Im Normalbetrieb können in einem Schritt S12 die aktuellen Messwerte 19, 19' ausgelesen oder empfangen werden. Dies kann beispielsweise jeweils in einem Intervall von 1 Sekunde bis 10 Sekunden erfolgen. In einem Schritt S13 kann geprüft werden, ob das aktuelle Zeitintervall 27 im Hochlastzeitfenster 35 liegt. Ist dies der Fall, müssen die Mittelwerte 26 unter dem Schwellenwert S gehalten werden, andernfalls nicht. In einem Schritt S14 kann deshalb überprüft werden, ob der aktuelle Messwert 19' für den Leistungsbezug P aus dem Versorgungsnetz 12 größer als der Schwellenwert S ist. Ist dies nicht der Fall, ist keine Korrektur oder Veränderung der Steuerung 21' der Anlagenkomponente 21 nötig. Es kann zum Schritt S12 zurückgekehrt werden. Ist der Messwert 19' dagegen größer als der Schwellenwert S, kann in einem Schritt S15 für das aktuelle Zeitintervall 27 der prognostizierte Mittelwert, d.h. der Prognosewert 28, berechnet und geprüft werden, ob der Prognosewert 28 größer als der Schwellenwert S ist. Ist dies der Fall, kann in einem Schritt S16 ein Sollwert für die abzugebende Kompensationsleistung 22 gemäß einer Variante V1 berechnet werden und mittels des Steuersignals 24 der Steuerung 21' der Anlagenkomponente 21 vorgeben werden. Die Steuerung 21' kann dann den Leistungsfluss der Kompensationsleistung 22 auf den Sollwert einregeln.

Ist der vorhergesagte Mittelwert 28 kleiner als der Schwellenwert S, so kann in einem Schritt S17 der Sollwert gemäß einer Variante V2 berechnet werden oder die Sollwertgenerierung wegfallen, falls eine Qualität der Prognosedaten 30 kleiner als ein Mindestwert ist. Der Sollwert kann dann mittels des Steuersignals 24 der Steuerung 21' in der beschriebenen Weise vorgegeben werden.

Liegt zum aktuellen Zeitpunkt T kein Hochlastzeitfenster vor (Prüfung im Schritt S13), so fließen die Leistungswerte nicht in die Bemessung des Leistungspreises der elektrischen Anlage ein, das heißt auch bei einem Leistungsbezug P größer als der Schwellenwert S ergibt sich kein Nachteil bezüglich des Leistungspreises. In diesem Fall kann in einem Schritt S18 überprüft werden, ob der Speicherfüllstand 32 kleiner als der Grenzwert 34 ist. In diesem Fall kann in einem Schritt S19 durch Vorgeben eines Sollwerts für den Leistungsfluss die Anlagenkomponente 21 aufgeladen werden. Der Sollwert kann mittels des Steuersignals 24 in der beschriebenen Weise in der Steuerung 21' eingestellt werden. Der Sollwert kann gemäß einer Variante V3 berechnet werden. Falls der Speicherfüllstand 32 größer als der Grenzwert 34 ist, kann zum Schritt S12 zurückgekehrt werden.

Falls im Schritt S11 nicht der Normalbetrieb N ausgewählt werden kann, sondern der Fehlerbetrieb E nötig ist, so können in einem Schritt S20 anstelle der aktuellen Messwerte 19' Prognosedaten 30' für den zumindest einen Verbraucher 15 und/oder den zumindest einen Erzeuger 16 oder allgemein für den Leistungsbezug P genutzt werden. In einem Schritt S13' kann wieder geprüft werden, ob das Hochlastzeitfenster 35 vorliegt. Falls dies der Fall ist, kann in einem Schritt S14' auf Grundlage der Prognosedaten 30' und der Prognosedaten 30 in einem Schritt S14' überprüft werden, ob zum aktuellen Zeitpunkt T der Leistungsbezug P der Leistung 13 voraussichtlich größer als der Schwellenwert S ist. Ist dies nicht der Fall, kann zum Schritt S20 zurückgekehrt werden. Anderenfalls kann in einem Schritt S15' der Prognosewert 28 prognostiziert werden und überprüft werden, ob dieser größer als der Schwellenwert S ist. Ist dies der Fall, kann in einem Schritt S16' gemäß einer Variante V4 der Sollwert berechnet werden und der Sollwert durch das Steuersignal 24 der Steuerung 21' vorgegeben werden.

Falls der Prognosewert 28 kleiner als der Schwellenwert S ist, kann in einem Schritt S17' gemäß einer Variante V5 der Sollwert berechnet werden und durch das Steuersignal 24 der Steuerung 21' vorgegeben werden. Falls kein Hochlastzeitfenster 35 vorliegt, kann in einem Schritt S18' überprüft werden, ob der Speicherfüllstand 32 kleiner als der Grenzwert 34 ist. Ist dies nicht der Fall, kann zum Schritt S20 zurückgekehrt werden. Falls der Speicherfüllstand 32 kleiner als der Grenzwert 34 ist, kann in einem Schritt S19' wie im Schritt S19 der Sollwert gemäß der Variante V3 berechnet werden und mittels des Steuersignals 24 der Steuerung 21 vorgegeben werden.

Insgesamt umfasst das Verfahren gemäß Fig. 3 somit folgende Algorithmen:
S13, S13': Überprüfung auf Hochlastzeitfenster 35 (Aktuelles Datum und aktuelle Uhrzeit T vergleichen mit Hochlastzeitfenster 35 im jeweiligen Netzgebiet).

S14, S14': Berechnung des aktuellen Leistungsbezugs: Messwert 19' am Werkszähler oder Messwerte 19 bereinigt um Wirkleistung der durch die Anlagenkomponente 21 gebildeten Speicherfarm.

S 18, S18': Überprüfung des Speicherfüllstands (aktueller Speicherfüllstand 32 vergleichen mit Grenzfüllstand 34).

S15: Überprüfen des durchschnittlichen Leistungswerts / Prognosewerts 28 (Prognostizierter Mittelwert auf Basis der Prognosewerte 30 und der Messwerte 19' im aktuellen Zeitintervall 27 - z.B. Mittelwert für ein 15 Minutenzeitfenster < Grenzwert oder Schwellenwert S?).

S15': Überprüfen des durchschnittlichen Leistungswerts / Prognosewerts 28 (Prognostizierter Mittelwert rein auf Basis der Prognosewerte 30, 30' im aktuellen Zeitintervall 27 - z.B. Mittelwert 28 für ein 15 Minutenzeitfenster < Grenzwert oder Schwellenwert S?)

S11: Überprüfung: Datenverbindung ok?

S16: Sollwert Variante V1: Generierung aus Werksbezug 19' mit Prognosedaten 30 (Aktueller Bezug + Wirkleistung der Anlagenkomponente 21 - Schwellenwert S + Sicherheitswert X).

S17: Sollwert Variante V2: Generierung aus Werksbezug 19' mit Prognosedaten 30 (Aktueller Bezug + Wirkleistung der Anlagenkomponente 21 - Schwellenwert S).

S19, S19': Sollwert Variante 3: Generierung Sollwert aus Speicherfüllstand 32 (Vordefinierter Sollwert an Speicher).

S16': Sollwert Variante 4: Im Fehlerbetrieb E kann die Sollwertgenerierung z.B. lokal auf der Steuerung 21' erfolgen: Generierung des Sollwerts aus Werksbezug (Aktueller Prognosewert 30' + Wirkleistung der Anlagenkomponente 21 - Schwellenwert S + Sicherheitswert X)

Sollwert Variante 5: Im Fehlerbetrieb E erfolgt die Sollwertgenerierung auf der Steuerung 21': Generierung des Sollwerts aus Werksbezug (Aktueller Prognosewert + Wirkleistung der Anlagenkomponente 21 - Schwellenwert S)

Es kann allerdings in der beschriebenen Weise ein Wegfall der Sollwert-Generierung in Abhängig von der Prognosequalität der Prognosewerte 30, 30' vorgesehen sein.

Das folgende Beispiel verdeutlicht die oben angegebenen Rechenformeln. Wichtig zu beachten ist, dass verbrauchte Leistung positiv und abgegebenen Leistung negativ gerechnet wird.

Der aktuelle Bezug ist der Netto-Leistungsbedarf des zumindest einen Verbrauchers 15, z.B. +12kW. Die von der Anlagenkomponente 21 bereitgestellte Kompensationsleistung 22 weist einen negativen Wert auf, z.B. -2kW. Der Schwellenwert S kann z.B. 8kW betragen. Somit ergibt sich für die Berechnung: Aktueller Bezug + Wirkleistung der Anlagenkomponente 21 - Schwellenwert S der Wert 12kW-2kW-8kW = 2kW, d.h. der Leistungsbezug P liegt um 2kW über dem Schwellenwert, sodass der Sollwert für die Steuerung 21' um diesen Wert angepasst oder erhöht werden muss. Um einen Puffer oder Sicherheitsabstand zum Schwellenwert S zu erhalten, kann der zusätzliche Sicherheitswert X vorgesehen sein, der z.B. in einem Bereich von 0,5kW bis 10kW liegen kann. Durch diesen Sicherheitswert X wird die Leistungsabgabe der Anlagenkomponente 21 erhöht und die Kompensationsleitung wird auf einen Wert eingeregelt, durch welchen sich ein Leistungsbezug P mit dem Wert S-X ergibt.

Das "Peak Shaving" für ein Spitzenlastmanagement sieht somit vor, dass ein Speicher das Werk oder die Anlage versorgt, wenn der Strombezug aus dem Netz einen Schwellwert überschreitet (Speicher entladen). In Zeiten mit niedriger Last kann der Speicher wieder beladen werden. Das Beispiel von Fig. 3 zeigt dabei die Netznutzung für den Sonderfall, dass der Speicher das Werk während der Hochlastzeitfenster versorgt (Speicher entladen) und außerhalb der Hochlastzeitfenster beladen wird.

Durch die Berücksichtigung der Messwerte 19, 19' erfolgt somit die Einbindung von Echtzeitdaten, insbesondere der Last oder des Verbrauchs und der Leistungskapazität, der Erzeuger und Verbraucher. Zudem werden Prognosedaten 30, 30' genutzt, die auf Basis von historischen Leistungsdaten gebildet werden können. Weiter kann die Prognose um aktuelle prognoserelevante Eingangsparameter, wie z.B. bezogen auf das Wetter und/oder einen Ausfall von zumindest einer Anlagenkomponente und/oder eine Anpassung von Produktionsstückzahlen, angereichert werden, welche relevant für den Energieverbrauch bzw. Energieerzeugung sind.

Die Steuerung erfolgt dann auf Basis dieser Daten, was eine verlässliche und ressourcenschonende Glättung des zeitlichen Verlaufs der bezogenen Leistung 13 ermöglicht.

Durch die Steuervorrichtung 20 wird somit durch die Einbeziehung von Echtzeitdaten eine dynamische Anpassung der Leistung von flexiblen Verbrauchern, Erzeugern und insbesondere Speichern ermöglicht. Somit stellt das Verfahren auf Basis von Echtzeitdaten (Messwerte 19, 19') eine effiziente Methodik zur Lastspitzenbegrenzung dar, welche insbesondere für schnell reagierende Anlagenkomponenten (Assets) geeignet ist (z.B. Batteriespeichern), um eine Steuerung der Analgen zu erreichen. Denn die abrechnungsrelevante Leistung 13 des Strombezugs wird auf Basis von z.B. viertelstündlichen Mittelwerten 26, 28 berechnet und dabei mit Echtzeitprognosen 30 angereichert und iterativ abgeglichen. Denn durch die Erfassung von Echtzeitdaten 19, 19' kann der abrechnungsrelevante durchschnittliche 15-Minuten-Mittelwert 28 prognostiziert werden. Durch die Kenntnis dieses Prognosewertes 28 kann auf den sich schließlich ergebenden abrechnungsrelevanten Mittelwert 26 Einfluss genommen werden.

Im bisherigen Ausführungsbeispiel wurde davon ausgegangen, dass nur die Anlagenkomponente 21 flexibel in Bezug auf ihre Leistung steuerbar ist. Natürlich können auch mehrere flexibel steuerbare Anlagenkomponenten vorgesehen sein, die dann jeweils gemäß dem Verfahren gesteuert werden können, um somit insgesamt mit mehreren steuerbaren Anlagenkomponenten die benötigte Kompensationsleistung bereitzustellen. So können z.B. auch die Anlagenkomponenten 15 und/oder 16 jeweils als flexibel steuerbare Anlagenkomponente zur Verfügung stehen. Dann handelt es sich um eine Multi-Asset-Anwendung.

Insgesamt zeigt das Beispiel, wie durch die Erfindung ein System zur dynamischen Lastspitzenbegrenzung bereitgestellt werden kann.

### Bezugszeichenliste

- 10: Anlage
- 11: Netzanschluss
- 12: Elektrisches Versorgungsnetz
- 13: Elektrische Leistung
- 14: Werkszähler
- 15: Elektrischer Verbraucher
- 16: Elektrischer Erzeuger
- 17: Anlagenkomponenten
- 18: Komponentenzähler
- 19: Messwerte
- 19': Messwert
- 20: Steuervorrichtung
- 21: Steuerbare Anlagenkomponente
- 21': Steuerung
- 22: Kompensationsleistung
- 23: Zähler
- 24: Steuersignal
- 25: Zeitintervall
- 26: Mittelwert
- 27: Aktuelles Zeitintervall
- 28: Prognosewert
- 29: Anfang
- 29': Ende
- 30: Prognosedaten
- 30': Prognosedaten
- 31: Datenspeicher
- 32: Speicherfüllstand
- 33: Externe Datenquelle
- 34: Grenzwert
- 35: Hochlastzeitfenster
- S10 bis S19: Verfahrensschritt
- P: Leistungsbezug
- T: Aktueller Zeitpunkt

## Patentansprüche

1. Verfahren zum Steuern zumindest einer für eine Lastspitzenbegrenzung steuerbaren Anlagenkomponente (21) in einer elektrischen Anlage (10), wobei die Anlage (10) über einen Netzanschluss (11) an ein elektrisches Versorgungsnetz (12) angeschlossen ist und für einzelne, aufeinanderfolgende Zeitintervalle (25) jeweils ein Mittelwert (26) eines Leistungsbezugs (P) aus dem Versorgungsnetz (12) erfasst wird und für den Fall, dass zumindest einer der Mittelwerte (26) größer als ein vorbestimmter Schwellenwert (S) ist, der Leistungsbezug (P) durch Schalten von elektrischer Kompensationsleistung (22) mittels der zumindest einen steuerbaren Anlagenkomponente (21) unter den Schwellenwert (S) geführt wird, wobei durch eine Steuervorrichtung (20) zu zumindest einem Zeitpunkt (T) innerhalb des jeweils aktuellen Zeitintervalls (27) der Mittelwert (26) des aktuellen Zeitintervalls (27) als Prognosewert (28) vorausgesagt wird, indem ein zukünftiger, bis zum Ende (29') des Zeitintervalls (27) reichender Verlauf des Leistungsbezugs (P) anhand von Prognosedaten (30) zumindest einer weiteren Anlagenkomponente (15, 16) der Anlage (10) ergänzt wird und hierdurch schon während des Zeitintervalls (27) entschieden wird, wie viel Kompensationsleistung (22) die zumindest eine steuerbare Anlagenkomponente (21) in der Anlage (10) bereitstellen soll,
**dadurch gekennzeichnet, dass**
für den Fall, dass der Prognosewert (28) kleiner als der Schwellenwert (S), aber größer als ein vorbestimmter Sicherheitswert (S-X) ist, mittels der zumindest einen steuerbaren Anlagenkomponente (21) durch Vorgeben eines Sollwerts für die abzugebende Kompensationsleistung (22) der Leistungsbezug (P) auf den Sicherheitswert (S-X) reduziert wird.

2. Verfahren nach Anspruch 1, wobei während des jeweils aktuellen Zeitintervalls (27) aufeinanderfolgende Messwerte (19') des aktuellen netzbezogenen Leistungsbezugs (P) ermittelt werden und der Prognosewert (28) nur geprüft wird, falls ein aktueller Messwert (19') größer oder gleich dem Schwellenwert (S) ist.

3. Verfahren nach einem der vorhergehenden Ansprüche, wobei eine Dauer jedes Zeitintervalls (25) jeweils in einem Bereich von 30 Sekunden bis 15 min liegt.

4. Verfahren nach einem der vorhergehenden Ansprüche, wobei die Prognosedaten (30) aus historischen Leistungsdaten der zumindest einen weiteren Anlagenkomponente (15, 16) gebildet werden.

5. Verfahren nach einem der vorhergehenden Ansprüche, wobei die zumindest eine steuerbare Anlagenkomponente (21) einen elektrischen Erzeuger und/oder einen Speicher und/oder einen elektrischen Verbraucher umfasst.

6. Verfahren nach einem der vorhergehenden Ansprüche, wobei zum Voraussagen des Prognosewerts (28) des aktuellen Zeitintervalls (27) ein bisheriger, vom Anfang (29) des Zeitintervalls (27) bis zum aktuellen Zeitpunkt (T) reichender Verlauf des Leistungsbezugs (P) in einem Normalbetriebsmodus (N) anhand von Messwerten (19, 19') aus der zumindest einen weiteren Anlagenkomponente (15, 16) und/oder aus dem Netzanschluss (11) gebildet wird und bei Fehlen der Messwerte (19, 19') in einem Fehlerbetriebsmodus (E) weitere Prognosedaten (30') der zumindest einen weiteren Anlagenkomponente (15, 16) zugrunde gelegt werden.

7. Verfahren nach einem der vorhergehenden Ansprüche, wobei für den Fall, dass der Leistungsbezug (P) kleiner als der Schwellenwert (S) ist, die zumindest eine steuerbare Anlagenkomponente (21) mit elektrischer Leistung aus dem Versorgungsnetz (12) regeneriert wird, falls die zumindest eine steuerbare Anlagenkomponente (21) keine Kompensationsleistung (22) bereitstellen muss.

8. Verfahren nach einem der vorhergehenden Ansprüche, wobei der netzbezogene Leistungsbezug (P) nur während eines für das Versorgungsnetz (12) definierten Hochlastzeitfensters (35) auf den Schwellenwert (S) begrenzt wird.

9. Steuervorrichtung (20) zum Steuern zumindest einer steuerbaren Anlagenkomponente (21), wobei die Steuervorrichtung (20) eine Recheneinrichtung aufweist, die dazu eingerichtet ist, ein Verfahren nach einem der vorhergehenden Ansprüche durchzuführen.

10. System zum Reduzieren von elektrischen Lastspitzen in einer elektrischen Anlage (10), aufweisend zumindest eine steuerbare Anlagenkomponente (21) und eine Steuervorrichtung (20) nach Anspruch 9.

## Claims

1. Method for controlling at least one installation component (21) which is controllable for load peak limiting in an electrical installation (10), wherein the installation (10) is connected to an electrical supply network (12) via a network connection (11) and an average value (26) of a power withdrawal (P) from the supply network (12) is detected in each case for individual, successive time intervals (25) and, in the event of at least one of the average values (26) being greater than a predetermined threshold value (S), the power withdrawal (P) is guided below the threshold value (S) by the switching of electrical compensation power (22) by means of the at least one controllable installation component (21), wherein at at least one point in time (T) within the respective present time interval (27) the average value (26) of the present time interval (27) is predicted as a forecast value (28) by a control device (20) by virtue of the fact that a future profile of the power withdrawal (P) extending to the end (29') of the time interval (27) is added on the basis of forecast data (30) of at least one further installation component (15, 16) of the installation (10) and as a result, already during the time interval (27), a decision is taken as to how much compensation power (22) ought to be provided by the at least one controllable installation component (21) in the installation (10),
**characterized in that**
in the event of the forecast value (28) being less than the threshold value (S) but greater than a predetermined safety value (S-X), the power withdrawal (P) is reduced to the safety value (S-X) by means of the at least one controllable installation component (21) by the stipulation of a setpoint value for the compensation power (22) to be output.

2. Method according to Claim 1, wherein during the respective present time interval (27) successive measurement values (19') of the present network-related power withdrawal (P) are determined and the forecast value (28) is checked only if a present measurement value (19') is greater than or equal to the threshold value (S) .

3. Method according to either of the preceding claims, wherein a duration of each time interval (25) is in each case in a range of 30 seconds to 15 min.

4. Method according to any of the preceding claims, wherein the forecast data (30) are formed from historical power data of the at least one further installation component (15, 16).

5. Method according to any of the preceding claims, wherein the at least one controllable installation component (21) comprises an electrical generator and/or a store and/or an electrical consumer.

6. Method according to any of the preceding claims, wherein for predicting the forecast value (28) of the present time interval (27) a previous profile of the power withdrawal (P) extending from the start (29) of the time interval (27) to the present point in time (T) in a normal operating mode (N) is formed on the basis of measurement values (19, 19') from the at least one further installation component (15, 16) and/or from the network connection (11), and in the absence of the measurement values (19, 19') in an error operating mode (E) further forecast data (30') of the at least one further installation component (15, 16) are taken as a basis.

7. Method according to any of the preceding claims, wherein in the event of the power withdrawal (P) being less than the threshold value (S), the at least one controllable installation component (21) is regenerated with electrical power from the supply network (12) if the at least one controllable installation component (21) need not provide any compensation power (22).

8. Method according to any of the preceding claims, wherein the network-related power withdrawal (P) is limited to the threshold value (S) only during a high-load time window (35) defined for the supply network (12) .

9. Control device (20) for controlling at least one controllable installation component (21), wherein the control device (20) comprises a computing unit configured to carry out a method according to any of the preceding claims.

10. System for reducing electrical load peaks in an electrical installation (10), comprising at least one controllable installation component (21) and a control device (20) according to Claim 9.

## Revendications

1. Procédé de commande d'au moins un composant d'installation (21) pouvant être commandé pour une limitation de pointe de charge dans une installation électrique (10), dans lequel l'installation (10) est raccordée à un réseau d'alimentation électrique (12) par un raccordement au réseau (11), et pour des intervalles de temps individuels consécutifs (25), respectivement une moyenne (26) d'une puissance absorbée (P) à partir du réseau d'alimentation (12) est détectée, et au cas où au moins l'une des moyennes (26) est supérieure à une valeur seuil (S) prédéterminée, la puissance absorbée (P) est amenée sous la valeur seuil (S) par la commutation d'une puissance de compensation électrique (22) au moyen du au moins un composant d'installation pouvant être commandé (21), dans lequel, un dispositif de commande (20) prédit à au moins un instant (T) à l'intérieur de l'intervalle de temps (27) respectivement actuel la moyenne (26) de l'intervalle de temps actuel (27) comme une valeur prévisionnelle (28) en complétant une allure future de la puissance absorbée (P) allant jusqu'à la fin (29') de l'intervalle de temps (27) à l'aide de données prévisionnelles (30) d'au moins un autre composant d'installation (15, 16) de l'installation (10), et de ce fait, il est décidé déjà pendant l'intervalle de temps (27) combien de puissance de compensation (22) ledit au moins composant d'installation (21) pouvant être commandé doit fournir dans l'installation (10), **caractérisé en ce qu'**au cas où la valeur prévisionnelle (28) est inférieure à la valeur seuil (S) mais supérieure à une valeur de sécurité (S-X) prédéterminée, la puissance absorbée (P) est réduite à la valeur de sécurité (S-X) au moyen du au moins un composant d'installation (21) pouvant être commandé par la spécification d'une valeur de consigne pour la puissance de compensation (22) à fournir.

2. Procédé selon la revendication 1, dans lequel, pendant l'intervalle de temps (27) respectivement actuel, des valeurs de mesure consécutives (19') de la puissance absorbée (P) du réseau actuelle sont établies, et la valeur prévisionnelle (28) n'est vérifiée que si une valeur de mesure actuelle (19') est supérieure ou égale à la valeur seuil (S).

3. Procédé selon l'une quelconque des revendications précédentes, dans lequel une durée de chaque intervalle de temps (25) est comprise respectivement dans une plage de 30 secondes à 15 minutes.

4. Procédé selon l'une quelconque des revendications précédentes, dans lequel les données prévisionnelles (30) sont formées à partir de données de puissance historiques du au moins un autre composant d'installation (15, 16).

5. Procédé selon l'une quelconque des revendications précédentes, dans lequel ledit au moins un composant d'installation (21) pouvant être commandé comprend un générateur électrique et/ou un accumulateur et/ou un consommateur électrique.

6. Procédé selon l'une quelconque des revendications précédentes, dans lequel, pour prédire la valeur prévisionnelle (28) de l'intervalle de temps actuel (27), une allure précédente de la puissance absorbée (P) allant du début (29) de l'intervalle de temps (27) jusqu'à l'instant actuel (T) dans un mode de fonctionnement normal (N) est formée à l'aide de valeurs de mesure (19, 19') provenant du au moins un autre composant d'installation (15, 16) et/ou du raccordement au réseau (11), et en l'absence des valeurs de mesure (19, 19') dans un mode de fonctionnement de défaut (E) d'autres données prévisionnelles (30') du au moins un autre composant d'installation (15, 16) sont utilisées.

7. Procédé selon l'une quelconque des revendications précédentes, dans lequel, au cas où la puissance absorbée (P) est inférieure à la valeur seuil (S), ledit au moins un composant d'installation (21) pouvant être commandé est régénéré par une puissance électrique provenant du réseau d'alimentation (12) si ledit au moins un composant d'installation (21) pouvant être commandé ne doit pas fournir de puissance de compensation (22).

8. Procédé selon l'une quelconque des revendications précédentes, dans lequel la puissance absorbée du réseau (P) n'est limitée à la valeur seuil (S) que pendant un créneau horaire de charge élevée (35) défini pour le réseau d'alimentation (12).

9. Dispositif de commande (20) permettant de commander au moins un composant d'installation (21) pouvant être commandé, le dispositif de commande (20) présentant un dispositif de calcul qui est aménagé pour effectuer un procédé selon l'une quelconque des revendications précédentes.

10. Système permettant de réduire des pointes de charge électriques dans une installation électrique (10), présentant au moins un composant d'installation (21) pouvant être commandé et un dispositif de commande (20) selon la revendication 9.
